# EUROPEAN PATENT APPLICATION

(11) **EP 1 496 517 A2**
(43) Date of publication of application: **12.01.2005**
(21) Application number: 04016014.5
(22) Date of filing: 07.07.2004
(51) Int. Cl.: G11B 31/00, G11B 33/02, G11B 19/02

(54) **Electronic equipment device and method for protecting electronic equipment**

(30) Priority: 09.07.2003 JP 2003194652
(71) Applicant: SONY CORPORATION, Tokyo (JP)
(72) Inventor: Takahashi, Nobutatsu c/o SONY CORPORATION, Tokyo (JP); Amatatsu, Seiya c/o SONY CORPORATION, Tokyo (JP)
(74) Representative: Rupp, Christian, Dipl.Phys.

(57) **Abstract**

When electronic equipment incorporating recording and reproducing drive unit such as an HDD unit is mounted on a cradle, the electronic equipment cannot be detached from the cradle while the HDD unit is during the operation, so that a crash of the HDD unit can be prevented.

In the state where a portable electronic equipment 1 incorporating an HDD unit 19 is mounted on a cradle 2, it is electrically detected that the HDD unit 19 is in driving operation and by locking the cradle 2 and the electronic equipment 1 through engaging unit 26, electronic equipment 1 is prevented from being removed from the cradle 2.

## Description

### BACKGROUND OF THE INVENTION

### Field of the Invention:

The present invention relates to an electronic equipment device, in which electronic equipment such as a portable recording and reproducing apparatus, image-pickup apparatus, digital camera or the like exchanges a signal with a computer and the like through a mounting frame, and particularly relates to an electronic equipment device in which protective measure is provided against a crash that occurs in the case where the power supply is changed during the operation of a recording and reproducing drive unit and a method for protecting electronic equipment device.

### Description of the Related Art:

Conventionally, with respect to electronic equipment such as a portable digital camera, there has been proposed one in which a recording and reproducing drive unit to record to and reproduce from a hard disc (a hard disc drive unit: hereinafter referred to as an HDD unit) or a flexible disc drive unit (FDD) is incorporated as a recording medium for recording and reproduction.

When the power supply is switched off before a write operation from a memory or the like into a hard disc of an HDD is completed (during a recording operation) in the above described electronic equipment incorporating the HDD unit or the like, a crash occurs in a system; and therefore, there is a description in a patent reference 1 of switching off the power supply after performing a task termination processing such as a concordance processing of a memory content, when the power supply is switched off.

In addition, when the external power supply such as a commercial power to the electronic equipment is interrupted, the requiring task termination processing can not be performed; and therefore there is disclosed in a patent reference 2 one in which electric power required for an emergency escape processing can be supplied by a secondary battery during a predetermined period of time, when the AC power supply is interrupted.

### [Paten reference 1]

Japanese published patent application No. H10-333786 (paragraph numbers 0014, 0015)

### [Patent reference 2]

Japanese published patent application No. H7-160375 (paragraph number 0003)

As described above, in electronic equipment incorporating the HDD unit, in order to prevent such disadvantages that content file data and management information are in an improper state on the hard disc or a crash occurs on the hard disc or the HDD unit when a voltage of a power supply fluctuates or a power supply is cut off while the hard disc is during the operation, release means such as a release button is provided to perform such operation as stopping the operation of HDD unit and is designed such that the release means is operated by a user to prevent the crash of the hard disc or the like.

On the other hand, when portable electronic equipment for image-pickup incorporating the HDD unit is driven by a secondary battery or the like, many users tend to forcibly open a battery cover or the like in order to change a battery during monitoring or performing image-pickup.

Moreover, if portable electronic equipement mounted on a mounting frame such as a cradle is lifted up from the mounting frame during the operation of the HDD unit in the middle of exchanging a signal with another computer or the like, a crash or the like occurs in the HDD unit due to an abrupt voltage fluctatuation or the like.

In order to eliminate tha above described disadvantage, it is obvious that the user is required to operate the release means to stop the HDD unit as described above so that a recording and reproducing head of the HDD unit during recording and reproducing operation can be returned to a start position using the secondary battery for backup or a high-capacity capacitor in the electronic equipment.

However, when the release button or the like of the release means is depressed during the recording operation for example, recording of content in the middle of recording is interrupted.

In order to prevent the above described disadvantages, the present invention is made to obtain an electronic equipment device and a method for protecting electronic equipment, in which while an HDD unit of the electronic equipment is during the operation in the state where a battery cover of the electronic equipment and the electronic equipment are mounted on a cradle, the battery cover cannot be opened and a lock mechanism is automatically activated so that the electronic equipment cannot be lifted up from the cradle; and after detecting that the HDD unit is turned into a non-operating mode, the lock mechanism is released, so that a crash of the HDD unit can be prevented.

### SUMMARY OF THE INVENTION

An electronic equipment device according to the present invention is provided, in which in the state where portable electronic equipment incorporating an HDD unit is mounted on a mounting frame, the operation of the HDD unit is electrically detected and the mounting frame and the electronic equipment are locked using engaging means so that the electronic equipment may not disengage from the mounting frame.

An electronic equipment device according to the present invention is the device in which electronic equipment incorporating a recording and reproducing drive unit that performs recording and reproduction of a recording medium is mounted on a mounting frame to perform various operations, including: lock means provided in the mounting frame for locking the electronic equipment on the mounting frame by engaging with the electronic equipment, and detection means for detecting that the recording and reproducing drive unit is during the operation, wherein the lock means is locked based on a detection output of the detection means, so that the electronic equipment cannot be disengaged from the mounting frame.

A method for protecting electronic equipment according to the present invention is the method for protecting the electronic equipment which incorporates a recording and reproducing drive unit that performs recording and reproduction of a recording medium and which is mounted on a mounting frame to perform various operations so that a recording medium and the recording and reproducing drive unit can be protected, wherein when it is detected that the recording and reproducing drive unit is in a driving mode with the electronic equipment mounted on the mounting frame, the electronic equipment cannot be disengaged from the mounting frame.

According to the electronic equipment device and the method for protecting electronic equipment as described above, a crash of the HDD unit can be prevented and recording information in the middle of recording can be prevented from being erased.

### BRIEF DESCRIPTION OF THE DRAWINGS

FIG. 1 is a front view showing a relevant portion of an embodiment of an electronic equipment device according to the present invention;
FIG. 2 is a flow chart for explaining an operation of the electronic equipment device according to the present invention;
FIGS. 3A to 3C are perspective views showing an electronic equipment unit and a cradle of an embodiment of the electronic equipment device, which is applied to the present invention;
FIG. 4 is a right side view of the electronic equipment device according to the present invention; and
FIG. 5 is a schematic diagram showing an embodiment of the electronic equipment device applied to the present invention.

### DESCRIPTION OF THE PREFERRED EMBODIMENT

Hereinafter, description is provided in detail with respect to an electronic equipment device, in which electronic equipment including a recording and reproducing drive unit (an HDD, FDD, optical pickup drive unit, flash memory and the like) to perform recording and reproducing of a recording medium and a camera such as a CCD as an image-pickup means, provided in a casing as electronic equipment according to the present invention is mounted on a mounting frame.

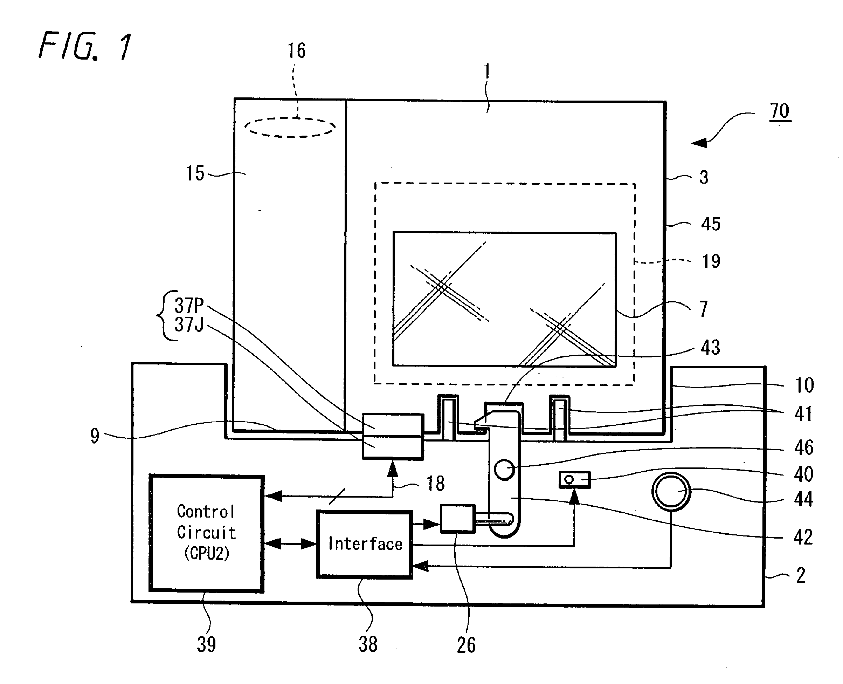

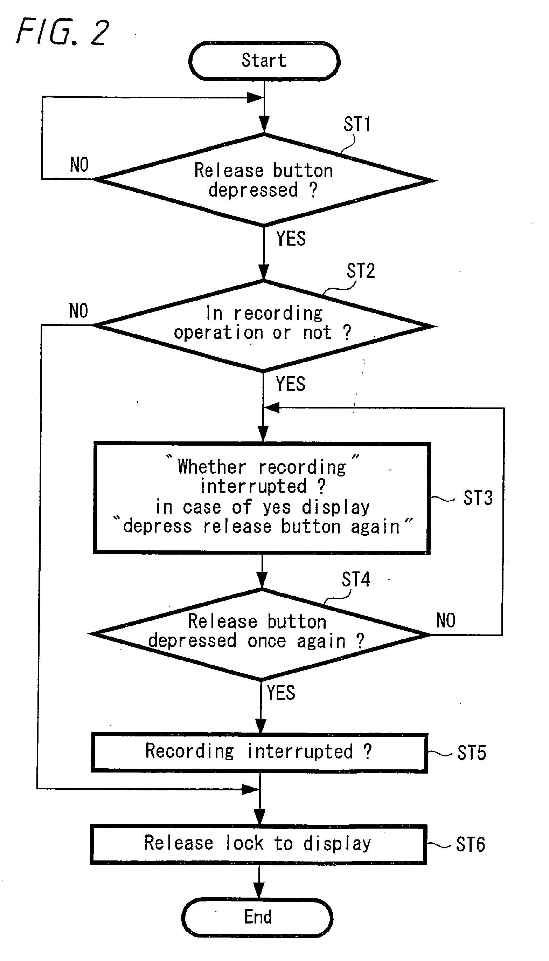

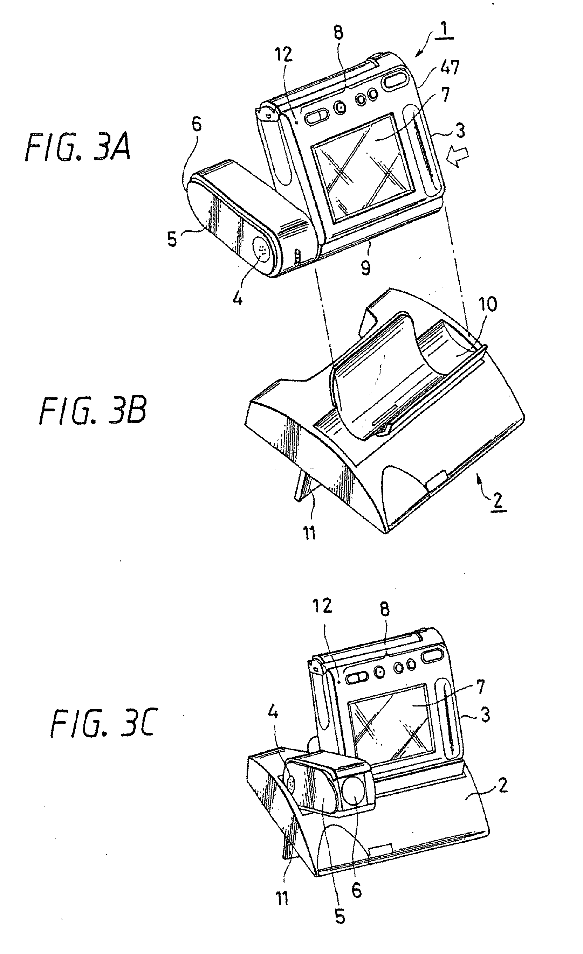

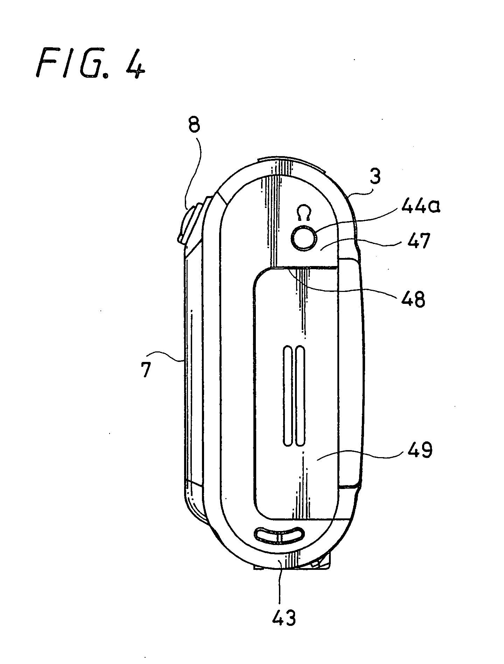

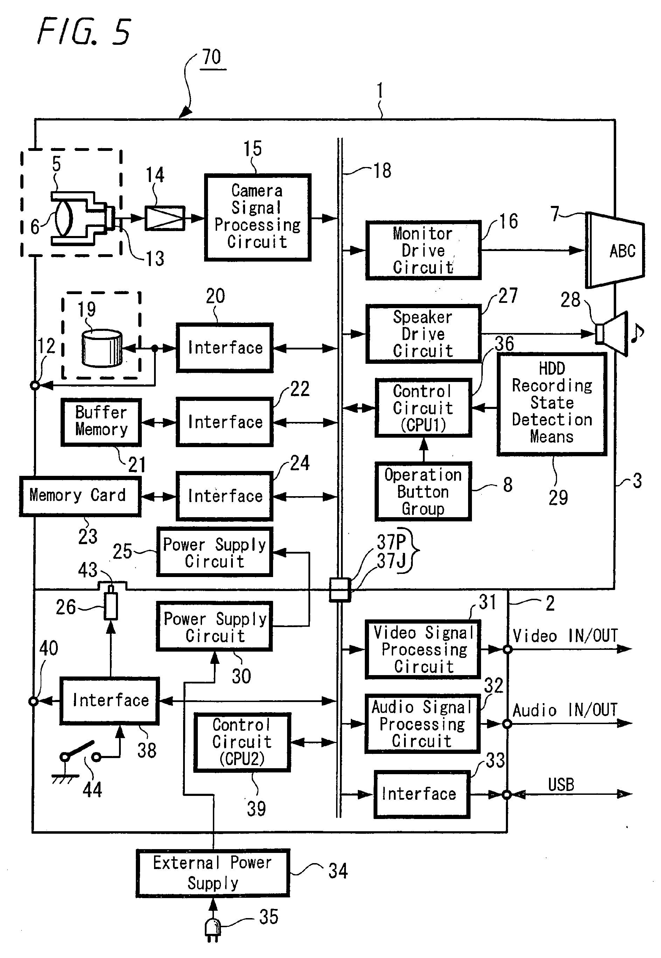

FIG. 1 is a front view schematically showing an embodiment of a structure of the electronic equipment device according to the present invention; FIG. 2 is a flow chart for explaining the electronic equipment device according to the present invention; FIGS. 3A to 3C are perspective views of an embodiment of the electronic equipment device according to the present invention; FIG. 4 is a plan view showing the right side portion viewed from an arrow A direction in FIG. 3A; and FIG. 5 is an overall schematic view of an embodiment of the electronic equipment device according to the present invention.

Before explaining the above described FIGS. 1 and 2 of the present invention, an overall structure of the electronic equipment device according to the present invention is explained by referring to FIGS. 3A to 3C and FIG. 4.

FIGS. 3A to 3C show the structure of the electronic equipment according to the present invention, and a signal transfer is performed through a cradle (Cradle) 2 between the electronic equipment and a computer (hereinafter referred to as a CPU1).

In FIGS. 3A and 3B, a reference numeral 1 denotes electronic equipment incorporating an HDD unit, a reference numeral 2 denotes a cradle that is a mounting frame for transmitting and receiving between the CPU1 image data or the like which is picked up by electronic equipment 1.

The electronic equipment 1 is composed of a casing as a main body 3 and a camera portion 5 which is pivotally provided on an axis 4 provided on the bottom end side of the casing. As shown in FIG. 3C, the camera portion 5 is capable of pivoting at approximately 180 degrees with respect to the main body 3 around the axis 4 as a center, so that a lens 6 can be set to a predetermined position on the front side or rear side.

A display portion 7 such as an LCD and a various operation button group 8 are provided on the front side of the main body 3, a thinly-shaped HDD unit (refer to FIGS. 1 and 5) 19 is provided to be approximately parallel with this display portion 7, and an LED 12 or the like indicating an access state of the HDD unit 19 is provided on the left side of the operation button group 8 so that the access state of the HDD unit 19 can be monitored from the outside of the main body 3.

Further, an electrical connection is established by inserting a semi-circular portion 9 of the main body 3 into a semi-circular concave portion 10 of the cradle 2 as shown in FIG. 3C, so that an output and input can be performed with a CPU, CRT or the like through a video terminal, an audio terminal and a USB (Universal Serial Bas) terminal (refer to FIG. 5) of the cradle 2. The cradle 2 also incorporates a charge circuit to further serve as a charging apparatus and is capable of being arranged with tilt on a mounting plane through a stand 11.

FIG. 5 is an overall schematic diagram of the electronic equipment according to the present invention, and the same reference numerals are given to portions corresponding to those in FIG. 3.

In the camera portion 5 of the electronic equipment 1, a video signal that is obtained by picking up an object image through an optical system of the lens 6 to be projected onto an image-pickup element such as a CCD 13 and is converted into an electrical signal in the CCD 13, an audio signal that is collected by a microphone, and the like are supplied to a bas line 18 connected to a control circuit 36 (hereinafter referred to as the CPU1) consisting of a main computer through a preamplifier circuit 14, a camera and audio signal processing circuit 15 and the like.

The HDD unit (recording and reproducing drive unit) 19, a buffer memory 21 and a memory card 23 are connected to the bas line 18 through interfaces 20, 22 and 24, so that regarding video signal data and audio signal data stored in the buffer memory 21 and the HDD unit 19, using the control circuit 36, the video signal is displayed on the display portion 7 such as a LCD for a monitor through a monitor drive circuit 16 and the audio signal is emitted through a speaker drive circuit 27 and a speaker 28; and if needed, the video signal, audio signal and USB signal are outputt to the outside through a video signal processing circuit 31, an audio signal processing circuit 32 and an interface 33 in the cradle 2.

In the cradle 2, an AC-DC conversion is carries out in a power supply circuit 30 with respect to an external AC power 34 supplied through a plug 35, and then the converted power is supplied as a voltage source to a power supply circuit 25 provided in the main body 3 of the electronic equipment 1, thereby operating each of the above described circuits.

An HDD operation state detection means 29 for detecting that the HDD unit 19 is during the operation is connected to the CPU1 36, and the above described operation button group 8 is connected to the CPU1 36. The LED 12 or the like indicating an access state of the HDD unit 19 is connected to the interface 20.

As shown in FIGS. 1 and 5, in the cradle 2, there is provided a second control circuit (CPU2) connected to the bas line 18, which is connected to a connector (jack) 37J through the bas line 18; a connector (plug) 37P is attached to the bottom portion of a casing 45 of the main body 3 of the electronic equipment 1; and the control circuit (CPU2) 39 is connected through an interface 38 to an indicator LED 40 for indicating an operating state of a release button 44 constituting release means and the cradle 2.

Further, a plunger 26 is also connected to the interface 38, and by driving or releasing the plunger 26 through the CPU2 39 and the interface 38, an engaging pawl 42 which sways around an axis 46 can be engaged with or released from an engaging groove 43 provided on the bottom portion of the casing 45 of the main body 3.

A guide pin 41, which is inserted into a through hole bored on the bottom portion of the main body 3 to be engaged, is projected in the semi-circular concave portion 10 of the cradle 2, so that the electronic equipment 1 mounted on the cradle 2 can be held at a predetermined position.

In FIG. 1, the casing 45 constituting the main body 3 of the electronic equipment 1 has an approximately flat rectangular parallelepiped shape, and the HDD unit 19 is pivotally installed to the inside of the casing 45 through a predetermined buffer member.

The HDD unit 19 has a compact structure, in which a turntable capable of mounting a hard disc; a head for recording data to and reproducing data from the hard disc; a motor to drive and rotate the turntable; and the like are incorporated in a casing of an approximately flat rectangular parallelepiped shape.

Further, the electronic equipment 1 according to this embodiment includes a battery holder and a battery cover 49 for inserting a primary or a secondary battery as shown in FIG. 4 which shows the right side portion 47 of the main body 3 of FIG. 3A, and this battery cover 49 has a mechanism attached thereto, in which the battery cannot be extracted while the HDD unit 19 is in an operating mode and the battery can be extracted when the HDD unit 19 comes to a halting mode. As a lock mechanism of this battery cover 49, a plunger or drive means such as a small motor or an actuator is used, and when the operating state of the HDD unit 19 is detected (this detection state is always perceived by the CPU with lighting the LED 12), the lock mechanism is operated to lock; however, it is also possible to have this portion associated with a release button 44 which becomes release means similar to that mentioned later on or to have a new release button 44a added thereto.

In the following, an electronic equipment device 70 of the present invention in which the electronic equipment 1 is mounted on the cradle 2 and a method for protecting the electronic equipment 1 are explained in accordance with a constitutional diagram of FIG. 1 and a flow chart of FIG. 2. A basic operation of the electronic equipment device 70 according to the present invention is that when the electronic equipment 1 is mounted on the cradle 2, the connector 37P of the main body 3 guided through the guide pin 41 and connector 37J are connected to each other and at the same time, the engaging pawl 42 is engaged with the engaging groove 43 of the main body 3, so that the main body 3 is automatically locked so as not to disengage from the cradle 2.

Alternatively, employing the HDD recording state detection means 29 which detects based on a control signal supplied to the second CPU2 39 from the main computer CPU1 36 through the bas line 18 that the HDD unit 19 is in a driving mode (without particularly providing such detection means, in order to light the LED 12 the driving state of the HDD unit 19 is perceived by the CPU1 using software or hardware), the plunger 26 may be driven by this detection output so as to engage the engaging pawl 42 shown in FIG. 1 with the engaging groove 43. Further, it is also possible to have the plunger 26 released so as to engage the engaging pawl 42 with the engaging groove 43.

Then, when it is detected that the HDD unit 19 comes to a halting mode, the lock is released by operating release means of for example the release button 42 or the like, so that the main body 3 can be detached from the cradle 2.

Therefore, since the electronic equipment 1 cannot be detached from the cradle 2 while the HDD unit 19 is during the operation, a crash does not occur in system data or a hard disc, there is no possibility of damaging the main body of the electronic equipment 1 and a safety can be maintained.

However, only with the above described basic structure, there arises a problem that data recording is interrupted and obtaining required data becomes impossible.

Therefore, according to this embodiment, a method for protecting electronic equipment in which a selection of recording data is made possible at the user's discretion is obtained, in accordance with a flow of processing shown in FIG. 2.

Referring to FIG. 2, the above described operation is explained. When the main body 3 of the electronic equipment 1 is released from the cradle 2 by depressing the release button 44 in FIG. 1, the CPU1 36 or the CPU2 39 judges whether the release button 44 is depressed or not as shown in the first step ST1 of FIG. 2.

In case of NO, which means the button is not depressed, the operation flow is returned before the first step ST1, however in case of YES, the operation flow proceeds to the second step ST2.

At the second step ST2, it is judged whether the HDD unit 19 is in recording operation or not, if it is in recording, the operation flow proceeds to the third step ST3, if it is NO which is not in recording, the operation flow proceeds to the sixth step ST6 in which the lock is released, the plunger 26 for example is driven to release the engaging pawl 42 from the engaging groove 43, a display of indicating that the lock has been released is performed on an LCD 7 and then, the operation flow comes to an end.

At the third step ST3, whether recording of data which is now operated to a hard disc in the HDD unit 19 can be interrupted or not is displayed in the LCD 7 of the display portion. In this case, a display describing "depress the release button once again" is shown if the recording can be interrupted.

At the fourth step ST4, it is confirmed whether the release button 44 was depressed once again or not, and in case of NO, the operation flow is returned before the third step 3, however in case of YES, the recording to the hard disc in the HDD unit 19 is interrupted at the fifth step ST5, the lock is released at the following sixth step ST6 and then, a display of the lock being released is shown on the LCD 7.

By protecting the HDD unit 19 of the electronic equipment 1 as described above, it becomes possible to eliminate such a disadvantage as the data being recorded by a user is interrupted or erased due to a depression of the release button 44.

As described above, although an electronic equipment device, in which electronic equipment having a recording medium drive unit such as an HDD unit to record to and reproduce from a recording medium and image-pickup means such as a digital camera is combined with a cradle, is explained in the present invention, it is also possible to apply the present invention to an apparatus in which electronic equipment such as a digital camera, a mobile phone unit, a portable recording and reproducing apparatus, a portable image-pickup apparatus or a portable terminal apparatus (PDA) for example, is combined with a cradle. Accordingly, only required is the feature in which separation of the cradle from the electronic equipment is impossible when the HDD unit is during the operation and is possible to be released when the HDD unit is in a halting mode. Consequently, data recording or the like can be interrupted at the user's discretion without causing a crash in the HDD unit.

According to the electronic equipment device and the method for protecting the electronic equipment of the present invention, it is possible to obtain an electronic equipment device and a method for protecting electronic equipment, in which when an HDD of the electronic equipment is during the operation in a state where a battery cover of the electronic equipment and the electronic equipment are mounted on a cradle, the battery cover cannot be opened and a lock mechanism is automatically or manually activated so that the electronic equipment cannot be lifted up from the cradle; and after detecting that the HDD unit turns to be in a non-operating mode, the lock mechanism is released, thereby preventing a crash of an HDD unit.

Furthermore, a method for protecting electronic equipment can be obtained in which by operating the release button, recording data being recorded in the HDD unit cannot be erased or interrupted.

Having described preferred embodiments of the invention with reference to the accompanying drawings, it is to be understood that the invention is not limited to those precise embodiments and that various changes and modifications could be effected therein by one skilled in the art without departing from the spirit or scope of the invention as defined in the appended claims.

## Claims

1. An electronic equipment device in which electronic equipment incorporating a recording and reproducing drive unit that performs recording and reproduction of a recording medium is mounted on a mounting frame to perform various operations, comprising:
lock means provided in said mounting frame for locking said electronic equipment on the mounting frame by engaging with the electronic equipment and
detection means for detecting that said recording and reproducing drive unit is during the operation, wherein
said lock means is locked based on a detection output of said detection means, so that said electronic equipment cannot be disengaged from said mounting frame.

2. The electronic equipment device according to claim 1, wherein
said mounting frame comprises release means for releasing said lock means, and said lock means cannot be released while said recording and reproducing drive unit is during the operation, even if said release means is operated.

3. The electronic equipment device according to claim 1 or 2, wherein
said recording and reproducing drive unit is an HDD unit.

4. A method for protecting electronic equipment in which electronic equipment incorporating a recording and reproducing drive unit that performs recording and reproduction of a recording medium is mounted on a mounting frame to perform various operations so that the recording medium and the recording and reproducing drive unit can be protected, wherein
when it is detected that said recording and reproducing drive unit is in a driving mode with said electronic equipment mounted on said mounting frame, the electronic equipment cannot be disengaged from the mounting frame.

5. The method for protecting the electronic equipment according to claim 4, wherein
even if lock release means provided in said mounting frame is operated, the lock is not released while said recording and reproducing drive unit is during the operation.

6. The method for protecting the electronic equipment according to claim 4 or 5, wherein
said recording and reproducing drive unit is an HDD unit.
